# EUROPEAN PATENT SPECIFICATION

(11) **EP 0 383 464 B1**
(45) Date of publication and mention of the grant of the patent: **11.05.1994**
(21) Application number: 90301150.0
(22) Date of filing: 02.02.1990
(51) Int. Cl.: F04D 13/06

(54) **Pumps**
Pumpe
Pompe

(30) Priority: 16.02.1989 GB 8903563
(43) Date of publication of application: 22.08.1990
(73) Proprietor: Hozelock Limited, Aylesbury Buckinghamshire HP17 8JD (GB)
(72) Inventor: Marston, Kevin Ian Michael, Aylesbury, Bucks, HP21 8UZ (GB); Watt, Peter Lawrence, Aylesbury, Bucks, HP19 3JW (GB); Burrell, Philip Andrew Stephen, Norwich, Norfolk, NR3 4BH (GB)
(74) Representative: Morton, Colin David

(56) References cited:
- EP-A- 0 148 343
- FR-A- 2 573 489
- US-A- 2 824 625

## Description

### Field of the Invention

This invention relates to pumps driven by electric motors, particularly pumps for use in pumping water in the garden, for example for fountains or waterfalls.

### Background to the Invention

Such pumps are normally driven by synchronous AC motors which rotate in either direction, dependent on whether start-up occurs in the positive or negative half wave of the AC supply. The pump impeller, driven by the motor, may thus rotate in either direction. This prevents the use of impeller blades which are shaped to operate in a single direction of rotation. This problem has been tackled by EP 0148343 which uses a system of cams and ramps on the impeller hub to prevent sustained rotation of the rotor in the undesired direction. The present invention solves the problem by a different approach.

FR-A-2573489 discloses an electrically driven pump having an impeller with six radially extending arms or blades engageable with a stop member pivotally mounted in a casing including a stator. The fact that there are six blades on the impeller means that it is possible for the rotor to come to rest (on switch-off) in a position in which the stop member prevents the rotor rotating to a position in which the rotor and stator poles are aligned.

This misalignment causes the rotor to lock-up and to be incapable of rotation when the pump is switched on. This problem is overcome by the invention.

### Summary of the Invention

According to the invention a pump for pumping fluid comprises an AC synchronous electric motor having a rotor and a stator, a housing defining a pump chamber accommodating an impeller rotatably driven by the rotor, the impeller having a desired direction of rotation, and a brake member movably mounted on the housing and movable so that if on start up of the motor the rotor drives the impeller in the undesired rotational direction, the resulting fluid flow or pressure urges the brake member towards an operative position in which the brake member impedes further rotation of the impeller in the undesired direction and thereby causes the rotor to reverse its direction of rotation and to drive the impeller in the desired direction, characterised in that the motor is a two pole permanent magnet rotor synchronous motor the rotor of which, on switch off, will come to rest in either of two positions relative to the stator, and in that the impeller has two and only two oppositely projecting blades engageable with the brake member, the two blades being positioned, in relation to the rest positions of the rotor, to allow the latter at least a certain amplitude of rotation in the undesired direction before one of the impeller blades engages the brake member. Hence, in the invention fluid flow resulting from rotation of the impeller in the undesired direction acts on the brake member and moves the latter to the operative position in which the brake member blocks further rotation of the impeller in the undesired direction.

On switch-off, the rotor will come to rest in either of two positions relative to the stator. To prevent the possibility of the brake member being in the operative position and preventing any rotation being imparted to the impeller on start-up, the two oppositely projecting blades are positioned, in relation to the rest positions of the rotor, to allow the latter at least a certain amplitude of rotation in the undesired direction before one of the impeller blades engages the braking member.

In a preferred embodiment, the brake member is in the form of a sprag pivotally mounted in the wall of the pump chamber which is shaped so as to cause fluid pressure to lift the sprag and move the latter to its operative position when the impeller rotates in the undesired direction. In its operative position, the sprag preferably engages the impeller blades to block continued rotation in the undesired direction.

A pump according to the invention will now be described by way of example with reference to the accompanying drawings in which:
Figure 1 is a cross-sectional view of the pump,
Figure 2 is a sectional view on the line II-II showing an impeller rotating in the desired direction, and
Figure 3 is a view similar to Figure 2 but showing a brake member blocking rotation of the impeller in the undesired direction.

The described pump is for pumping water, for a fountain or waterfall in the garden.

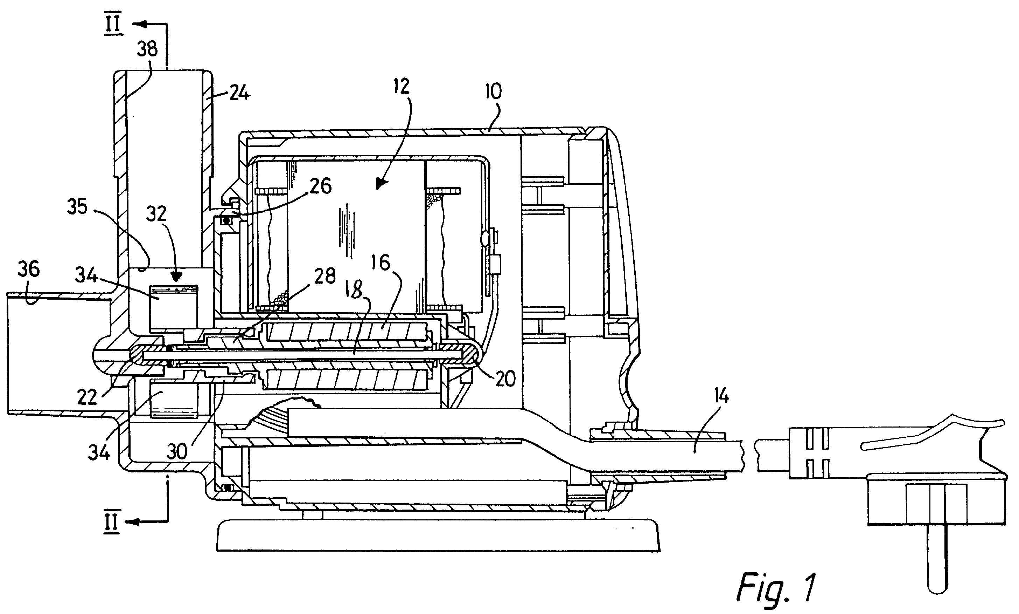

Referring to Figure 1, the pump comprises a plastics motor housing 10 enclosing a two pole permanent magnet rotor synchronous motor 12 electric power for which is supplied by a cable 14. The two pole rotor 16 surrounds and rotates with a sleeve 28 which is rotatable on a stationary shaft 18 supported in resilient end bearings 20, 22 the latter of which is supported in a plastics pump housing 24 detachably secured to the housing 10 by a bayonet fitting 26.

The sleeve 28 drives (through a lost motion connection later to be described) the hub 30 of an impeller 32 having impeller blades 34.

The impeller 32 is disposed within a pump chamber 35 which is defined by the housing 24 and which is supplied by water through a water inlet 36. Water under pressure is delivered from an outlet 38 of the pump.

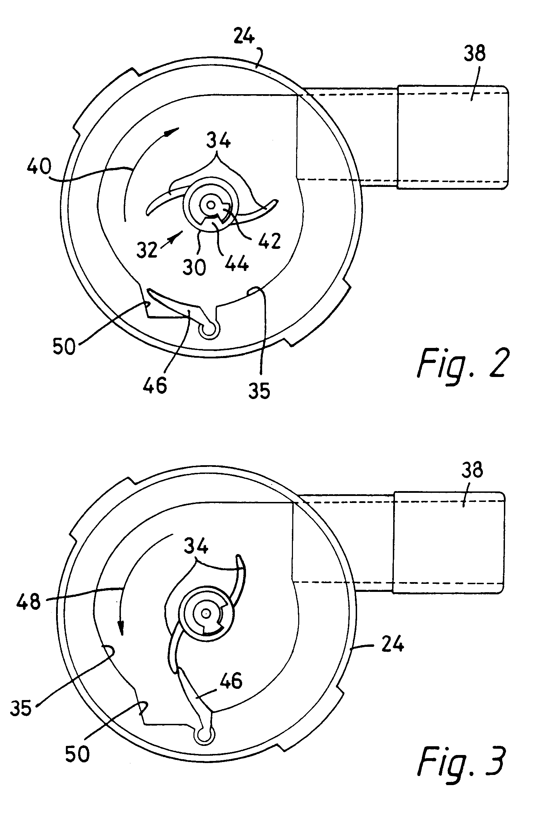

Figures 2 and 3 show that the impeller blades 34 are shaped to work efficiently in one particular direction of rotation, which is the desired direction of rotation and which is indicated by arrow 40 in Figure 2. Figure 2 also illustrates the lost motion connection previously referred to between the sleeve 28 and the impeller hub 30. This lost motion connection is provided by the sleeve 28 having a sector shaped projection 42 which, after taking up any lost motion in an arcuate slot, engages an internally projecting tab 44 on the hub 30.

On start up, the motor can rotate in either direction dependent on whether start up occurs in the positive or negative half wave of the AC supply. The invention is concerned with the provision of a brake member in the form of a sprag 46 which prevents sustained rotation of the rotor in the undesired direction which is shown by the arrow 48 in Figure 3. The sprag 46 is of a plastics material (but could alternatively be of metal) and one end is pivotally received in a part-circular bearing in the wall of the chamber 35.

If the rotor drives the impeller in the undesired direction 48 (after take up of the lost motion between the components 42 and 44) water pressure applied to the underside of the sprag 46 moves it from its retracted inoperative position shown in Figure 2 to its projecting operative position shown in Figure 3. Water pressure reaches the underside of the sprag 46 by virtue of the internal wall of the pump chamber 35 being recessed at 50, and the sprag is shaped as illustrated so as to respond to one direction of water flow in such manner that flow in direction 48 lifts the sprag to its projecting position and flow in direction 40 pivots the sprag to its retracted position in which it offers minimal resistance to water flow.

When the sprag 46 is pivoted to its projecting position the impeller blades engage the sprag 46 (Figure 3), recoil as a result of the impact and thereby cause the rotor to rotate in the opposite (and therefore desired) direction 40. When the impeller is being driven in the desired direction 40, water pressure urges the sprag 46 to its retracted position shown in Figure 2, in which the impeller blades clear the sprag 46.

The rotor, being a two pole rotor, will come to rest in either of two possible angular positions with respect to the stator. The motor must start on no load and to prevent the impeller blades engaging the sprag 46 immediately on start up, and thereby causing the pump to lock up completely, the two blades 34 are positioned, in relation to the rest positions of the rotor, to allow the latter at least a certain amplitude of rotation in the direction 48 before one of the blades 34 engages the projecting sprag 46.

## Claims

1. A pump for pumping fluid, comprising an AC synchronous electric motor (12) having a rotor (16) and a stator, a housing (24) defining a pump chamber (35) accommodating an impeller (32) rotatably driven by the rotor, the impeller having a desired direction of rotation, and a brake member (46) movably mounted on the housing and movable so that if on start up of the motor the rotor drives the impeller in the undesired rotational direction (48), the resulting fluid flow or pressure urges the brake member (46) towards an operative position in which the brake member (46) impedes further rotation of the impeller in the undesired direction (48) and thereby causes the rotor (16) to reverse its direction of rotation and to drive the impeller in the desired direction (40), characterised in that the motor (12) is a two pole permanent magnet rotor synchronous motor the rotor of which, on switch off, will come to rest in either of two positions relative to the stator, and in that the impeller (32) has two and only two oppositely projecting blades (34) engageable with the brake member (46), the two blades (34) being positioned, in relation to the rest positions of the rotor, to allow the latter at least a certain amplitude of rotation in the undesired direction before one of the impeller blades engages the brake member (46).

2. A pump according to claim 1, characterised in that the brake member (46) is in the form of a sprag pivotally mounted in the wall of the pump chamber which is shaped so as to cause fluid pressure to lift the sprag (46) and move the latter to its operative position when the impeller rotates in the undesired direction, fluid pressure biassing the sprag (46) to an inoperative retracted position against the wall of the pump chamber when the impeller rotates in the desired rotational direction.

## Patentansprüche

1. Eine Pumpe zum Pumpen von Strömungsmitteln mit einem elektrischen Wechselspannungssynchronmotor (12) mit einem Rotor (16) und einem Stator, einem eine Pumpenkammer (35) bildenden Gehäuse (24) zur Aufnahme eines von dem Rotor drehbar angetriebenen Schaufelrades (32), das eine beliebige Drehrichtung aufweist, mit einem am Gehäuse beweglich gehaltenen Bremsglied (46), das so beweglich ist, daß, falls der Motor beim Anlaufen das Schaufelrad in der ungewünschten Drehrichtung (48) antreibt, die sich einstellende Strömungsmittelströmung oder der Druck das Bremsglied (46) in Richtung auf eine Arbeitsstellung vorbewegt, in der es eine weitere Drehung des Schaufelrades in der ungewünschten Richtung (48) verhindert und damit eine Umkehr der Drehrichtung des Rotors (16) und einen Antrieb des Schaufelrades in der gewünschten Richtung (40) bewirkt, dadurch gekennzeichnet, daß der Motor (12) ein Synchronmotor mit einem zweipoligen Rotor aus einem Dauermagneten ist, der beim Abschalten in einer von zwei Stellungen gegenüber dem Stator zur Ruhe kommt, und daß das Schaufelrad (32) zwei und nur zwei in entgegengesetzten Richtungen vorstehende Schaufeln (34) aufweist, die mit dem Bremsglied (46) in Anlage geraten können, und daß die beiden Schaufeln (34) gegenüber den Ruhestellungen des Rotors so angeordnet sind, daß dem letzteren eine Drehung in der ungewünschten Richtung mit einer gewissen Amplitude ermöglicht wird, bevor eine der Schaufelradschaufeln mit dem Bremsglied (46) in Anlage gerät.

2. Eine Pumpe nach Anspruch 1, dadurch gekennzeichnet, daß das Bremsglied (46) die Form eines in der Wand der Pumpenkammer schwenkbar gehaltenen Hemmkeiles aufweist und die Pumpenkammer so geformt ist, daß der Druck des Strömungsmittels bei einer Drehung des Schaufelrades in der ungewünschten Richtung den Hemmkeil (46) anhebt und in seine Arbeitsstellung bewegt und der Druck des Strömungsmittels bei einer Drehung des Schaufelrades in der gewünschten Drehrichtung den Hemmkeil (46) in seine an der Wand der Pumpenkammer zurückgezogene Außerbetriebsstellung drückt.

## Revendications

1. Pompe pour fluide, comprenant un moteur électrique synchrone (12) à courant alternatif présentant un rotor (16) et un stator, un carter (24) définissant une chambre de pompe (35) contenant une roue en hélice (32) entraînée en rotation par le rotor, dans le sens de rotation souhaité et un organe de freinage (16) monté mobile sur le carter et déplaçable de manière que, lors du démarrage du moteur, si le rotor entraîne la roue en hélice dans le sens de rotation (48) non-désiré, l'écoulement de fluide ou la pression résultants poussent l'organe de freinage (46) vers une position de fonctionnement dans laquelle il empêche la roue en hélice de continuer à tourner dans le sens non-désiré (48) et force de ce fait le rotor (16) à inverser son sens de rotation et à entraîner la roue en hélice dans le sens souhaité (40), caractérisée en ce que le moteur (12) est un moteur synchrone à aimants permanents à deux pôles, dont le rotor, lors de la mise hors circuit, vient au repos dans l'une de deux positions par rapport au stator et en ce que la roue en hélice (32) présente deux et seulement deux aubes (34), saillant de manière opposée, susceptibles de venir en prise avec l'organe de freinage (46), les deux aubes (34) étant disposées, par rapport aux positions de repos du rotor, de façon à permettre à ce dernier au moins une certaine amplitude de rotation dans le sens non-désiré, avant que l'une des aubes de la roue en hélice ne vienne en prise avec l'organe de freinage (46).

2. Pompe selon la revendication 1, caractérisée en ce que l'organe de freinage (46) se présente sous la forme d'un sabot d'arrêt monté pivotant dans la paroi de la chambre de la pompe, conçue de manière à forcer la pression hydraulique à lever ce sabot d'arrêt (46) et à le déplacer vers sa position de fonctionnement lorsque la roue en hélice tourne dans le sens non-désiré, la pression hydraulique déplaçant élastiquement le sabot d'arrêt (46) vers une position rétractée non-fonctionnelle, contre la paroi de la chambre de pompe, lorsque la roue en hélice tourne dans le sens de rotation souhaité.
